# EUROPEAN PATENT APPLICATION

(11) **EP 4 525 222 A1**
(43) Date of publication of application: **19.03.2025**
(21) Application number: 23811734.5
(22) Date of filing: 18.05.2023
(51) Int. Cl.: H01R 35/04

(54) **FLAT CABLE ASSEMBLY AND ROTATIONAL CONNECTOR DEVICE**

(30) Priority: 24.05.2022 JP 2022084607; 08.07.2022 JP 2022110716
(71) Applicant: FURUKAWA ELECTRIC CO., LTD., Tokyo 100-8322 (JP); Furukawa Automotive Systems Inc., Inukami-gun, Shiga 522-0242 (JP)
(72) Inventor: KITAMURA, Tomohiro, Inukami-gun, Shiga 522-0242 (JP); HASEGAWA, Yuya, Inukami-gun, Shiga 522-0242 (JP)
(74) Representative: Weickmann & Weickmann PartmbB
(86) International application number: PCT/JP2023/018612
(87) International publication number: WO 2023/228861

(57) **Abstract**

A cable connector assembly (30) includes a cable connector (31), a first flat cable (32), and a second flat cable (33). The first flat cable (32) includes a first conductor exposure portion (32B). The second flat cable (33) includes a second conductor exposure portion (33B). The cable connector (31) includes a restriction portion (37) contactable with the first flat cable (32) to restrict the first conductor exposure portion (32B) from moving toward the second conductor exposure portion (33B) in a first direction (D1).

## Description

### Technical Field

The technology disclosed in the present application relates to a flat cable assembly and a rotary connector device.

### Background Art

In the rotary connector described in Patent Literature 1, two flat cables are stacked vertically, and a folded end portion is formed adjacent to a cutout portion of the lower-layer flat cable. This folded end portion is inserted into a slit provided in the insulating base, thereby preventing short-circuiting between the conductor cut surfaces of the two flat cables.

### Citation List

### Patent Literature

Patent Literature 1: Japanese Patent No. 5,833,522

### Summary of Invention

### Technical Problem

However, the structure in which the folded end portion of the flat cable is inserted into the slit of the insulating base requires relatively complicated assembly work, potentially leading to increased costs. Additionally, providing a slit in the insulating base as described in Patent Literature 1 may complicate the mold structure, also potentially increasing costs.

An object of the technology disclosed in the present application is to provide a cable connector assembly that can suppress or prevent short-circuiting between a first flat cable and a second flat cable while suppressing the increase in the manufacturing cost.

### Solution to Problem

In accordance with a first aspect, a cable connector assembly includes a cable connector, a first flat cable, and a second flat cable. The cable connector includes a first bus bar having conductivity, a second bus bar having conductivity, and a connector body having electrical insulation and partially covering the first bus bar and the second bus bar. The first flat cable includes a first conductor connection portion electrically connected to the first bus bar and a first conductor exposure portion provided at a position different from a position of the first conductor connection portion. The second flat cable includes a second conductor connection portion electrically connected to the second bus bar and a second conductor exposure portion provided at a position different from a position of the second conductor connection portion. The cable connector includes a first surface and a second surface provided on a reverse side of the first surface in a first direction. The first flat cable is disposed to partially overlap the second flat cable when viewed from the first direction. The second flat cable is provided partially between the first surface and the first flat cable in the first direction. The cable connector includes a restriction portion contactable with the first flat cable to restrict the first conductor exposure portion from moving toward the second conductor exposure portion in the first direction.

With the cable connector assembly according to the first aspect, since the restriction portion restricts the first conductor exposure portion from moving toward the second conductor exposure portion in the first direction, it is possible to suppress or prevent short-circuiting between the first conductor exposure portion and the second conductor exposure portion with a relatively simple structure. Accordingly, it is possible to suppress or prevent short-circuiting between the first flat cable and second flat cable while suppressing the increase in the manufacturing cost.

In accordance with a second aspect, in the cable connector assembly according to the first aspect, the restriction portion is disposed to partially overlap the first flat cable when viewed from the first direction. The restriction portion is disposed not to overlap the second flat cable when viewed from the first direction.

With the cable connector assembly according to the second aspect, since the restriction portion is disposed to partially overlap the first flat cable and not to overlap the second flat cable when viewed from the first direction, it is possible to suppress or prevent short-circuiting between the first flat cable and second flat cable in a state where the second flat cable is close to the cable connector. Therefore, the size of the restriction portion can be relatively small, and it is possible to reliably suppress or prevent short-circuiting between the first flat cable and second flat cable while suppressing the increase in the manufacturing cost.

In accordance with a third aspect, in the cable connector assembly according to the first aspect, the restriction portion protrudes from the first surface of the connector body in the first direction.

With the cable connector assembly according to the third aspect, since the restriction portion protrudes from the first surface of the connector body in the first direction, the structure of the restriction portion can be relatively simple. Accordingly, it is possible to suppress or prevent short-circuiting between the first flat cable and second flat cable while reliably suppressing the increase in the manufacturing cost.

In accordance with a fourth aspect, in the cable connector assembly according to the third aspect, the first flat cable has a first thickness defined in the first direction in a state where the first conductor connection portion is electrically connected to the first bus bar. The second flat cable has a second thickness defined in the first direction in a state where the second conductor connection portion is electrically connected to the second bus bar. The restriction portion has a protrusion length defined in the first direction from the first surface. The protrusion length is greater than the second thickness.

With the cable connector assembly according to the fourth aspect, since the protrusion length is greater than the second thickness, it is possible to secure a sufficient distance between the first conductor exposure portion and the second conductor exposure portion in the first direction. Therefore, by simply arranging the first flat cable and the second flat cable on the first surface of the cable connector, the first conductor exposure portion can be distanced from the second conductor exposure portion. As a result, the assembly process can be simplified, and it is possible to reliably suppress or prevent short-circuiting between the first flat cable and the second flat cable while suppressing the increase in the manufacturing cost.

In accordance with a fifth aspect, in the cable connector assembly according to the fourth aspect, the protrusion length is greater than a total of the first and second thicknesses.

With the cable connector assembly according to the fifth aspect, since the protruding length is greater than the total of the first thickness and the second thickness, the distance between the first conductor exposed portion and the second conductor exposed portion in the first direction can be secured more effectively. Accordingly, it is possible to reliably suppress or prevent short-circuiting between the first flat cable and the second flat cable while reliably suppressing the increase in the manufacturing cost.

In accordance with a sixth aspect, in the cable connector assembly according to any one of the first to fifth aspects, the restriction portion is integrally provided with the connector body.

With the cable connector assembly according to the sixth aspect, it is possible to suppress or prevent the increase in the manufacturing cost which is caused by the restriction portion.

In accordance with a seventh aspect, in the cable connector assembly according to any one of the first to fifth aspects, the first conductor exposed portion is disposed to at least partially overlap the second conductor exposed portion when viewed from the first direction.

With the cable connector assembly according to the seventh aspect, by overlapping the first flat cable and the second flat cable, the space occupied by the first flat cable and the first flat cable can be reduced, thereby enabling miniaturization of the cable connector assembly.

In accordance with an eighth aspect, in the cable connector assembly according to any one of the first to fifth aspects, the first flat cable includes a main body portion including the first conductor connection portion and an overlapping portion at least partially including the first conductor exposed portion and disposed to overlap at least partially the second conductor exposed portion when viewed from the first direction. The restriction portion is contactable with the overlapping portion to restrict the overlapping portion from moving toward the second conductor exposed portion in the first direction.

With the cable connector assembly according to the eighth aspect, since the overlapping portion is restricted from moving toward the second conductor exposed portion in the first direction by the restriction portion, it is possible to reliably suppress or prevent short-circuiting between the first flat cable and the second flat cable while suppressing the increase in the manufacturing cost.

In accordance with a ninth aspect, in the cable connector assembly according to the eighth aspect, the restriction portion includes a contact surface contactable with the overlapping portion. The contact surface includes an inclined surface inclined relative to the first direction.

With the cable connector assembly according to the ninth aspect, by providing the inclined surface to the restriction portion, an increase in a space occupied by the restriction portion can be suppressed. Accordingly, it is possible to suppress or prevent short-circuiting between the first flat cable and the second flat cable while reliably suppressing the increase in the manufacturing cost.

In accordance with a tenth aspect, in the cable connector assembly according to the eighth aspect, the overlapping portion is inclined relative to the main body portion in a state where the restriction portion restricts the first conductor exposed portion from moving toward the second conductor exposed portion.

With the cable connector assembly according to the tenth aspect, since the overlapping portion is inclined relative to the main body portion, the increase in the space occupied by the overlapping portion can be suppressed. Accordingly, it is possible to suppress or prevent short-circuiting between the first flat cable and the second flat cable while reliably suppressing the increase in the manufacturing cost.

In accordance with an eleventh aspect, in the cable connector assembly according to the eighth aspect, the overlapping portion protrudes from the main body portion when viewed from the first direction in a state where the restriction portion restricts the first conductor exposed portion from moving toward the second conductor exposed portion.

With the cable connector assembly according to the eleventh aspect, since it is not necessary to pre-bend the overlapping portion, the work of attaching the first flat cable to the cable connector becomes relatively easy. Accordingly, it is possible to suppress or prevent short-circuiting between the first flat cable and the second flat cable while reliably suppressing the increase in the manufacturing cost.

In accordance with a twelfth aspect, in the cable connector assembly according to the eighth aspect, the restriction portion includes a support groove contactable with the overlapping portion to restrict the first conductor exposed portion from moving toward the second conductor exposed portion in the first direction. The overlapping portion is at least partially disposed in the support groove.

With the cable connector assembly according to the twelfth aspect, since the support groove can restrict the first conductor exposed portion from moving toward the second conductor exposed portion, the restriction portion can be realized with a relatively simple structure. Accordingly, it is possible to suppress or prevent short-circuiting between the first flat cable and the second flat cable while reliably suppressing the increase in the manufacturing cost.

In accordance with a thirteenth aspect, in the cable connector assembly according to the twelfth aspect, the overlapping portion is disposed in the support groove in a bent state relative to the main body portion.

With the cable connector assembly according to the thirteenth aspect, since the support groove can support the overlapping portion by utilizing the elastic force of the overlapping portion, the restriction portion can be realized with a relatively simple structure. Accordingly, it is possible to suppress or prevent short-circuiting between the first flat cable and the second flat cable while reliably suppressing the increase in the manufacturing cost.

In accordance with a fourteenth aspect, in the cable connector assembly according to the thirteenth aspect, the overlapping portion is disposed to at least partially overlap the main body portion when viewed from the first direction in a state where the overlapping portion is disposed in the support groove.

With the cable connector assembly according to the fourteenth aspect, it is possible to suppress the increase in the space occupied by the overlapping portion. Accordingly, it is possible to suppress or prevent short-circuiting between the first flat cable and the second flat cable while reliably suppressing the increase in the manufacturing cost.

In accordance with a fifteenth aspect, in the cable connector assembly according to any one of the first to fifth aspects, the cable connector assembly further comprises a holding portion provided in the restriction portion. The holding portion is contactable with the first flat cable to restrict the first conductor exposed portion from moving away from the second conductor exposed portion in the first direction.

With the cable connector assembly according to the fifteenth aspect, the holding portion makes the position of the first conductor exposed portion relative to the second conductor exposed portion more stable.

In accordance with a sixteenth aspect, in the cable connector assembly according to the fifteenth aspect, the holding portion protrudes from the restriction portion in the first direction.

With the cable connector assembly according to the sixteenth aspect, the holding portion can be realized with a simple structure.

In accordance with a seventeenth aspect, in the cable connector assembly according to the sixteenth aspect, the first flat cable includes a holding opening. The holding portion protrudes from the restriction portion through the holding opening in the first direction.

With the cable connector assembly according to the seventeenth aspect, the holding portion can be realized with a simpler structure.

In accordance with an eighteenth aspect, a rotary connector device includes a stator, a rotator rotatable about a rotational axis relative to the stator, and the cable connector assembly according to any one of the first to fifth aspects.

With the rotary connector device according to the eighteenth aspect, by using the cable connector assembly, it is possible to suppress or prevent short-circuiting between the first flat cable and the second flat cable while suppressing the increase in the manufacturing cost of the rotary connector device.

### Advantageous Effects of Invention

With the technology disclosed in the present application, it is possible to provide the cable connector assembly that can suppress or prevent short-circuiting between the first flat cable and the second flat cable while suppressing the increase in the manufacturing cost.

### Brief Description of Drawings

FIG. 1 is a top view of a rotary connector device according to a first embodiment.
FIG. 2 is a cross-sectional view of the rotary connector device shown in FIG. 1.
FIG. 3 is a perspective view of a cable connector assembly of the rotary connector device shown in FIG. 1.
FIG. 4 is an exploded plan view of the cable connector assembly shown in FIG. 3.
FIG. 5 is a partial perspective view of a first flat cable of the cable connector assembly shown in FIG. 3.
FIG. 6 is a partial perspective view of a second flat cable of the cable connector assembly shown in FIG. 3.
FIG. 7 is a cross-sectional view of the cable connector assembly taken along the line VII-VII in FIG. 8.
FIG. 8 is a partial plan view of the cable connector assembly shown in FIG. 3.
FIG. 9 is a cross-sectional view of the cable connector assembly taken along the line IX-IX in FIG. 8.
FIG. 10 is a partial plan view of a cable connector assembly according to a second embodiment.
FIG. 11 is a cross-sectional view of the cable connector assembly taken along the line XI-XI in FIG. 10.
FIG. 12 is a partial plan view of a cable connector assembly according to a third embodiment.
FIG. 13 is a cross-sectional view of the cable connector assembly taken along the line XIII-XIII in FIG. 12.
FIG. 14 is a partial perspective view of the cable connector of the cable connector assembly shown in FIG. 12.
FIG. 15 is a cross-sectional view of a cable connector assembly according to a modified example.

### Description of Embodiments

Embodiments will be described below with reference to the drawings. In the drawings, the same reference signs indicate corresponding or identical configurations.

### First Embodiment

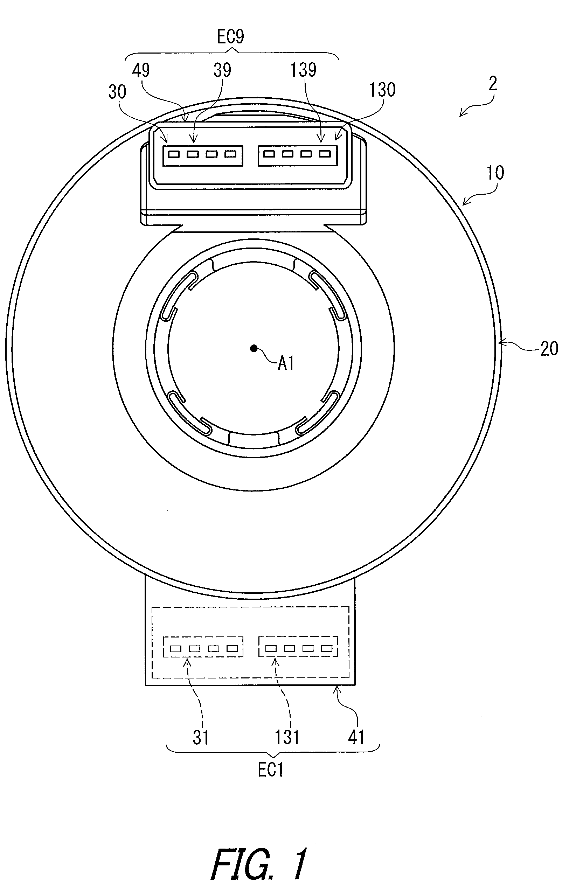

As shown in FIG. 1, the rotary connector device 2 includes a stator 10 and a rotator 20. The stator 10 is configured to be attached to a vehicle body. The rotator 20 is rotatable about a rotational axis relative to the stator 10. The rotator 20 is configured to be connected to a steering wheel.

The rotary connector device 2 includes a cable connector assembly 30. The cable connector assembly 30 includes a cable connector 31. The cable connector assembly 30 includes a cable connector 39. The cable connector 39 has substantially the same structure as the structure of the cable connector 31. Therefore, the cable connector 31 will be described here, and the description of the cable connector 39 will be omitted. The description of the cable connector 31 can be applied to the cable connector 39.

In the present embodiment, the rotary connector device 2 includes a cable connector assembly 130. The cable connector assembly 130 includes cable connectors 131 and 139. The cable connector assembly 130 has substantially the same structure as the structure of the cable connector assembly 30. The cable connectors 131 and 139 have substantially the same structure as the structure of the cable connector 31. Accordingly, the cable connector assembly 30 will be described here, and the description of the cable connector assembly 130 will be omitted. The description of the cable connector assembly 30 can be applied to the cable connector assembly 130.

The stator 10 includes a connector mounting portion 41. The rotator 20 includes a connector mounting portion 49. The cable connector 31 is attached to the connector mounting portion 41, and the cable connector 39 is attached to the connector mounting portion 49.

The cable connector 31, cable connector 131, and the connector mounting portion 41 constitute an electrical connector EC1. The cable connector 39, cable connector 139, and the connector mounting portion 49 constitute an electrical connector EC9. The electrical connector EC1 is configured so that a vehicle-side connector is detachably attached to. The vehicle-side connector is electrically connected to an electric circuit of a control device or the like. The electrical connector EC9 is configured so that a steering-side connector is detachably attached to. The steering-side connector is electrically connected to electric circuits of switches of the steering wheel, an airbag device, or the like. The vehicle-side and steering-side connectors may also be referred to as external connectors.

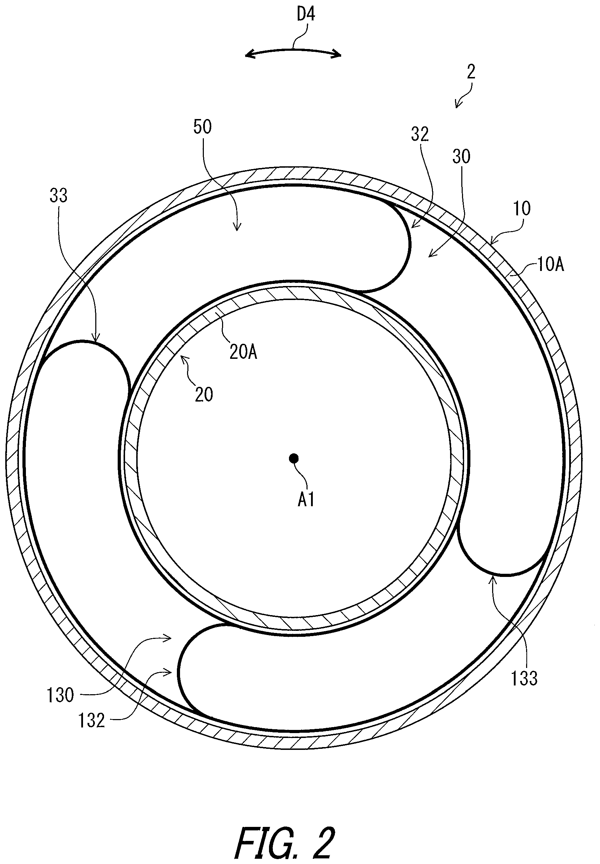

As shown in FIG. 2, the stator 10 and rotator 20 form a cable housing space 50 provided to surround the rotational axis A1. For example, the cable housing space 50 is annular and extends in a circumferential direction D4 relative to the rotational axis A1.

The cable connector assembly 30 includes a first flat cable 32 and a second flat cable 33. The first flat cable 32 and the second flat cable 33 are electrically connected to the cable connector 31 (see, for example, FIG. 1). The first flat cable 32 and the second flat cable 33 are electrically connected to the cable connector 39 (see, for example, FIG. 1). In other words, each of the first flat cable 32 and the second flat cable 33 electrically connects the cable connectors 31 and 39 (see, for example, FIG. 1).

The first flat cable 32 and the second flat cable 33 are disposed in the cable housing space 50. Each of the first flat cable 32 and the second flat cable 33 is wound around an outer cylindrical portion 10A of the stator 10 and an inner cylindrical portion 20A of the rotator 20 so that the electrical connection between the cable connectors 31 and 39 is maintained even when the rotator 20 rotates relative to the stator 10.

Similarly, the cable connector assembly 130 includes a first flat cable 132 and a second flat cable 133. The first flat cable 132 and the second flat cable 133 are electrically connected to the cable connector 131 (see, for example, FIG. 1). The first flat cable 132 and the second flat cable 133 are also electrically connected to the cable connector 139 (see, for example, FIG. 1). In other words, each of the first flat cable 132 and the second flat cable 133 electrically connects the cable connectors 131 and 139 (see, for example, FIG. 1).

The first flat cable 132 and the second flat cable 133 are disposed in the cable housing space 50. The first flat cable 132 and the second flat cable 133 are wound around the outer cylindrical portion 10A of the stator 10 and the inner cylindrical portion 20A of the rotator 20 so that the electrical connection between the cable connectors 131 and 139 is maintained even when the rotator 20 rotates relative to the stator 10.

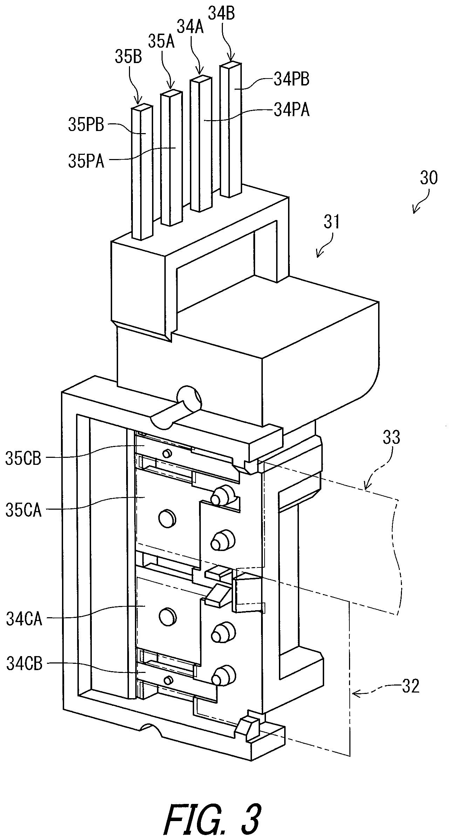

As shown in FIG. 3, the cable connector 31 includes a first bus bar 34A, a second bus bar 35A, and a connector body 36. In the present embodiment, the cable connector 31 also includes a first bus bar 34B and a second bus bar 35B. However, the total number of bus bars is not limited to the present embodiment. For example, at least one of the first bus bar 34B and the second bus bar 35B may be omitted from the cable connector 31, or the cable connector 31 may include another bus bar in addition to the first bus bars 34A and 34B or the second bus bars 35A and 35B.

The first bus bar 34A has conductivity. The first bus bar 34A includes a conductive material. The first bus bar 34B has conductivity. The first bus bar 34B includes a conductive material.

The second bus bar 35A has conductivity. The second bus bar 35A includes a conductive material. The second bus bar 35B has conductivity. The second bus bar 35B includes a conductive material.

The connector body 36 has electrical insulation and partially covers the first bus bar 34A and the second bus bar 35A. The connector body 36 partially covers the first bus bars 34A and 34B and the second bus bars 35A and 35B. The connector body 36 includes an electrical insulation material.

The first bus bar 34A is partially exposed from the connector body 36. The second bus bar 35A is partially exposed from the connector body 36. The first bus bar 34B is partially exposed from the connector body 36. The second bus bar 35B is partially exposed from the connector body 36. For example, the first bus bars 34A and 34B and the second bus bars 35A and 35B are embedded in the connector body 36 by insert molding. However, the first bus bars 34A and 34B and the second bus bars 35A and 35B may be embedded in the connector body 36 by methods other than insert molding.

The first bus bar 34A includes a first connection pin 34PA and a first cable connection portion 34CA. The first connection pin 34PA is exposed from the connector body 36 to be electrically connected to the conductor of the vehicle-side or steering-side connector. The first connection pin 34PA protrudes from the connector body 36. The first cable connection portion 34CA is exposed from the connector body 36 to be electrically connected to the first flat cable 32.

The first bus bar 34B includes a first connection pin 34PB and a first cable connection portion 34CB. The first connection pin 34PB is exposed from the connector body 36 to be electrically connected to the conductor of the vehicle-side or steering-side connector. The first connection pin 34PB protrudes from the connector body 36. The first cable connection portion 34CB is exposed from the connector body 36 to be electrically connected to the first flat cable 32.

The second bus bar 35A includes a second connection pin 35PA and a second cable connection portion 35CA. The second connection pin 35PA is exposed from the connector body 36 to be electrically connected to the conductor of the vehicle-side or steering-side connector. The second connection pin 35PA protrudes from the connector body 36. The second cable connection portion 35CA is exposed from the connector body 36 to be electrically connected to the second flat cable 33.

The second bus bar 35B includes a second connection pin 35PB and a second cable connection portion 35CB. The second connection pin 35PB is exposed from the connector body 36 to be electrically connected to the conductor of a vehicle-side or steering-side connector. The second connection pin 35PB protrudes from the connector body 36. The second cable connection portion 35CB is exposed from the connector body 36 to be electrically connected to the second flat cable 33.

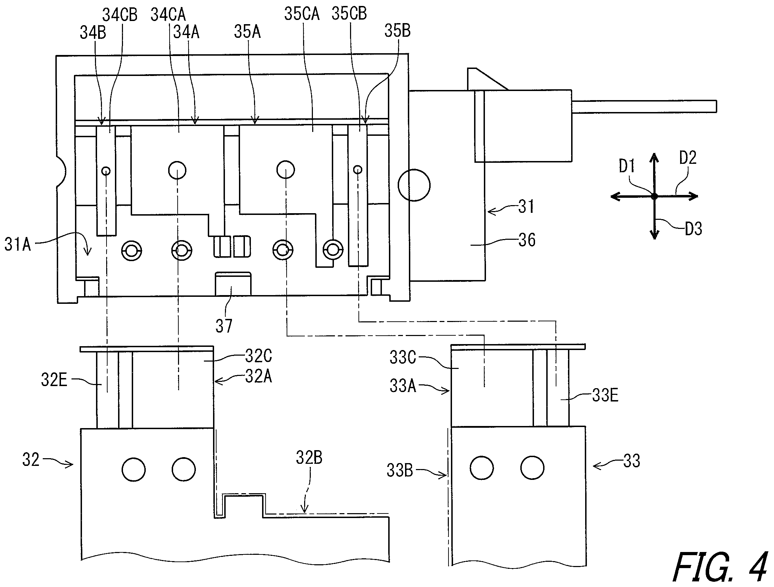

As shown in FIG. 4, the first flat cable 32 is flexible and has a flat shape. The first flat cable 32 may also be referred to as a first flexible flat cable 32.

The second flat cable 33 is flexible and has a flat shape. The second flat cable 33 may also be referred to as a second flexible flat cable 33.

The first flat cable 32 includes a first conductor connection portion 32A and a first conductor exposure portion 32B. The first conductor connection portion 32A is electrically connected to the first bus bar 34A. The first conductor connection portion 32A is electrically connected to the first bus bars 34A and 34B. For example, the first conductor connection portion 32A is connected to the first bus bars 34A and 34B by welding. However, the first conductor connection portion 32A may be electrically connected to the first bus bars 34A and 34B by other methods.

The first conductor exposure portion 32B is provided at a position different from a position of the first conductor connection portion 32A. For example, the first conductor exposure portion 32B is provided along a part of the contour of the first flat cable 32.

The second flat cable 33 has flexibility and has a flat shape. The second flat cable 33 may also be referred to as the second flexible flat cable. The second flat cable 33 includes a second conductor connection portion 33A and a second conductor exposure portion 33B. The second conductor connection portion 33A is electrically connected to the second bus bar 35A. The second conductor connection portion 33A is electrically connected to the second bus bars 35B. For example, the second conductor connection portion 33A is connected to the second bus bars 35A and 35B by welding. However, the second conductor connection portion 33A may be electrically connected to the second bus bars 35A and 35B by other methods.

The second conductor exposure portion 33B is provided at a position different from a position of the second conductor connection portion 33A. For example, the second conductor exposure portion 33B is provided along a part of the contour of the second flat cable 33.

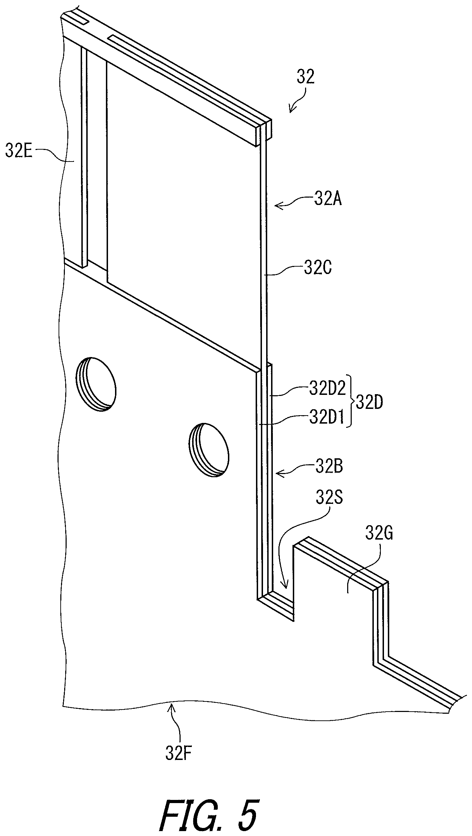

As shown in FIG. 5, in the present embodiment, the first flat cable 32 includes a first conductor 32C and a first insulation cover 32D. The first conductor 32C includes a conductive material. The first insulation cover 32D includes an electrical insulation material and partially covers the first conductor 32C. The first conductor 32C is exposed from the first insulation cover 32D at the first conductor connection portion 32A. The first conductor 32C is exposed from the first insulation cover 32D at the first conductor exposure portion 32B. The first conductor 32C is electrically connected to the first bus bar 34A. The first insulation cover 32D includes first insulators 32D1 and 32D2. The first conductor 32C is disposed between the first insulators 32D1 and 32D2.

For example, the first conductor connection portion 32A is formed by not forming the first insulation cover 32D on the first conductor 32C or by peeling off a portion of the first insulation cover 32D from the first conductor 32C. On the other hand, the first conductor exposure portion 32B is provided at a cut surface formed when the first flat cable 32 is cut from the flat cable material.

The first flat cable 32 includes a first additional conductor 32E. The first insulation cover 32D partially covers the first additional conductor 32E. The first additional conductor 32E is exposed from the first insulation cover 32D at the first conductor connection portion 32A. The first additional conductor 32E is electrically connected to the first bus bar 34B at the first conductor connection portion 32A. The first additional conductor 32E is connected to the first cable connection portion 34CB at the first conductor connection portion 32A. The first additional conductor 32E is not exposed from the first insulation cover 32D at the first conductor exposure portion 32B. However, the first additional conductor 32E may be exposed from the first insulation cover 32D at the first conductor exposure portion 32B.

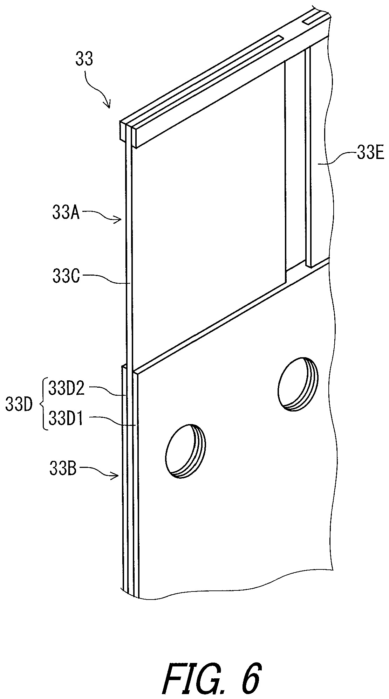

As shown in FIG. 6, in the present embodiment, the second flat cable 33 includes a second conductor 33C and a second insulation cover 33D. The second conductor 33C includes a conductive material. The second insulation cover 33D includes an electrical insulation material and partially covers the second conductor 33C. The second conductor 33C is exposed from the second insulation cover 33D at the second conductor connection portion 33A. The second conductor 33C is exposed from the second insulation cover 33D at the second conductor exposure portion 33B. The second conductor 33C is electrically connected to the second bus bar 35A. The second insulation cover 33D includes second insulators 33D1 and 33D2. The second conductor 33C is disposed between the second insulators 33D1 and 33D2.

For example, the second conductor connection portion 33A is formed by not forming the second insulation cover 33D on the second conductor 33C or by peeling off a portion of the second insulation cover 33D from the second conductor 33C. On the other hand, the second conductor exposure portion 33B is provided at a cut surface formed when the second flat cable 33 is cut from the flat cable material.

The second flat cable 33 includes a second additional conductor 33E. The second insulation cover 33D partially covers the second additional conductor 33E. The second additional conductor 33E is exposed from the second insulation cover 33D at the second conductor connection portion 33A. The second additional conductor 33E is electrically connected to the second bus bar 35B at the second conductor connection portion 33A. The second additional conductor 33E is connected to the second cable connection portion 35CB at the second conductor connection portion 33A. The second additional conductor 33E is not exposed from the second insulation cover 33D at the second conductor exposure portion 33B. However, the second additional conductor 33E may be exposed from the second insulation cover 33D at the second conductor exposure portion 33B.

As shown in FIG. 4, the first conductor 32C is electrically connected to the first bus bar 34A at the first conductor connection portion 32A. The first conductor 32C is connected to the first cable connection portion 34CA at the first conductor connection portion 32A.

The first additional conductor 32E is electrically connected to the first bus bar 34B at the first conductor connection portion 32A. The first additional conductor 32E is connected to the first cable connection portion 34CB at the first conductor connection portion 32A.

The second conductor 33C is electrically connected to the second bus bar 35A at the second conductor connection portion 33A. The second conductor 33C is connected to the second cable connection portion 35CA at the second conductor connection portion 33A.

The second additional conductor 33E is electrically connected to the second bus bar 35B at the second conductor connection portion 33A. The second additional conductor 33E is connected to the second cable connection portion 35CB at the second conductor connection portion 33A.

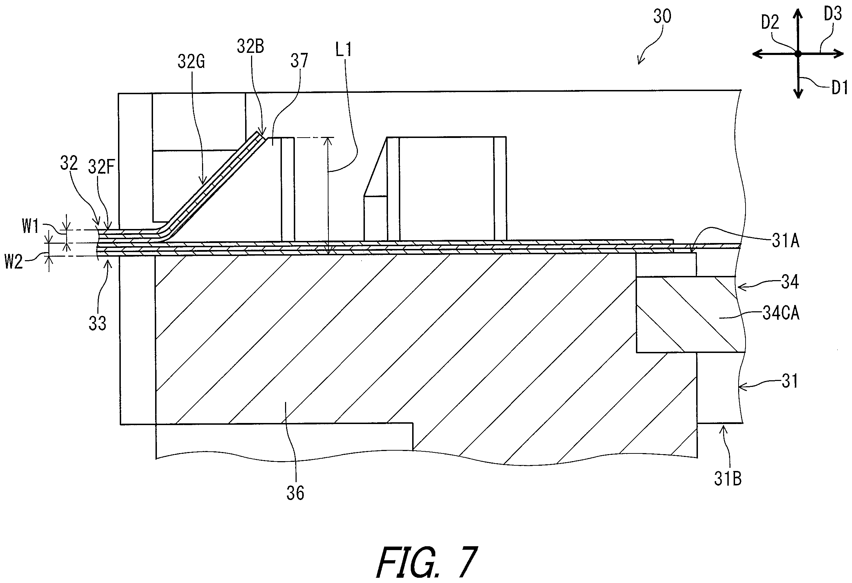

As shown in FIG. 7, the cable connector 31 includes a first surface 31A and a second surface 31B provided on a reverse side of the first surface 31A in the first direction D1. The first flat cable 32 and the second flat cable 33 are provided on the first surface 31A. The connector body 36 includes the first surface 31A and the second surface 31B. The first direction D1 corresponds to a vertical direction in FIG. 7.

The second flat cable 33 is provided partially between the first surface 31A and the first flat cable 32 in the first direction D1. In the present embodiment, the second flat cable 33 is provided partially between the first surface 31A and the first flat cable 32 in the first direction D1. However, the second flat cable 33 may be provided entirely between the first surface 31A and the first flat cable 32 in the first direction D1.

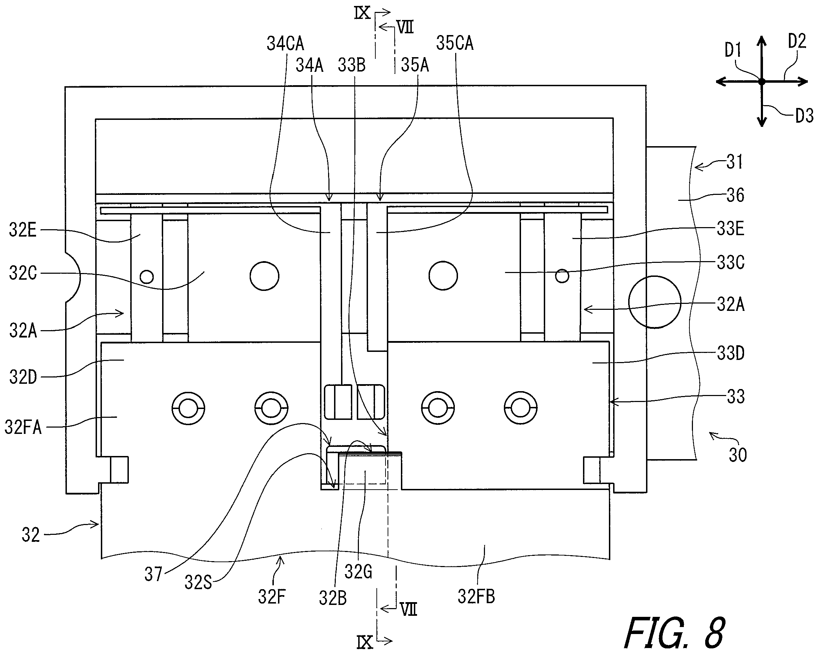

As shown in FIG. 8, the first flat cable 32 is disposed to partially overlap the second flat cable 33 when viewed from the first direction D1. The first conductor connection portion 32A is disposed not to overlap the second conductor connection portion 33A when viewed from the first direction D1. The first conductor connection portion 32A is disposed with a space between the second conductor connection portion 33A in the second direction D2. The second direction D2 is perpendicular to the first direction D1. The first conductor connection portion 32A is provided at the end of the first flat cable 32. The second conductor connection portion 33A is provided at the end of the second flat cable 33. The first flat cable 32 extends from the first conductor connection portion 32A in the third direction D3. The second flat cable 33 extends from the second conductor connection portion 33A in the third direction D3. The third direction D3 is perpendicular to both the first direction D1 and the second direction D2. The second direction D2 corresponds to the left-right direction in FIG. 8. The third direction D3 corresponds to the vertical direction in FIG. 8.

The first conductor exposure portion 32B is disposed to at least partially overlap the second conductor exposure portion 33B when viewed from the first direction D1. In the present embodiment, the first conductor exposure portion 32B is disposed to partially overlap the second conductor exposure portion 33B when viewed from the first direction D1. However, the first conductor exposure portion 32B may be disposed to entirely overlap the second conductor exposure portion 33B when viewed from the first direction D1.

The first flat cable 32 includes a main body portion 32F and an overlapping portion 32G. The main body portion 32F includes the first conductor connection portion 32A. The overlapping portion 32G at least partially includes the first conductor exposure portion 32B and is disposed to at least partially overlap the second conductor exposure portion 33B when viewed from the first direction D1. In the present embodiment, the overlapping portion 32G is disposed to partially overlap the second conductor exposure portion 33B when viewed from the first direction D1. However, the overlapping portion 32G may be disposed to entirely overlap the second conductor exposure portion 33B when viewed from the first direction D1.

The first flat cable 32 includes a slit 32S provided between the main body portion 32F and the overlapping portion 32G. The main body portion 32F includes a first main body portion 32FA and a second main body portion 32FB. The first main body portion 32FA includes the first conductor connection portion 32A. The second main body portion 32FB extends from the first main body portion 32FA. The overlapping portion 32G extends from the second main body portion 32FB. The slit 32S is provided between the first main body portion 32FA and the overlapping portion 32G in the second direction D2. The slit 32S may also be a cut.

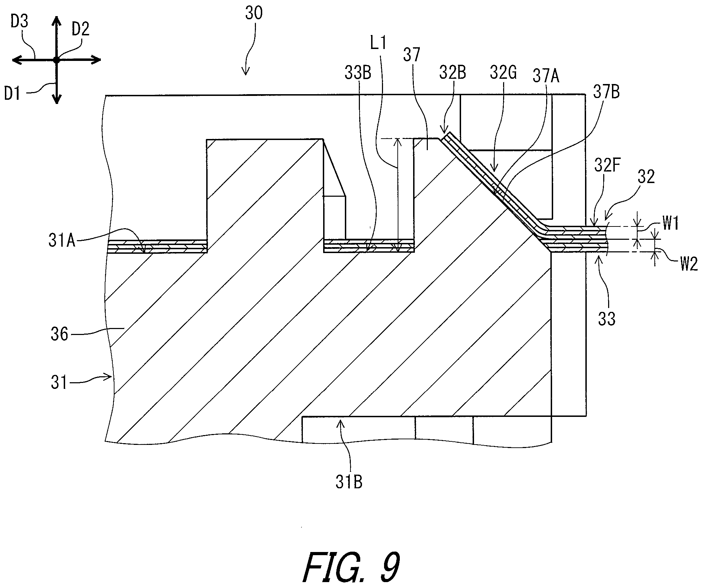

As shown in FIG. 9, the cable connector 31 includes a restriction portion 37. The restriction portion 37 is contactable with the first flat cable 32 in the first direction D1 to restrict the first conductor exposure portion 32B from moving toward the second conductor exposure portion 33B. The restriction portion 37 protrudes from the first surface 31A of the connector body 36 in the first direction D1.

In the present embodiment, the restriction portion 37 is integrally provided with the connector body 36 as a one-piece member. However, the restriction portion 37 may be a separate member from the connector body 36. In that case, for example, the restriction portion 37 may be attached to the connector body 36 using an attachment structure such as adhesion or press-fitting.

The restriction portion 37 is contactable with the overlapping portion 32G to restrict the overlapping portion 32G from moving toward the second conductor exposure portion 33B in the first direction D1. In the present embodiment, the restriction portion 37 includes a contact surface 37A contactable with the overlapping portion 32G. The contact surface 37A includes an inclined surface 37B inclined relative to the first direction D1. The overlapping portion 32G is inclined relative to the main body portion 32F in a state where the restriction portion 37 restricts the first conductor exposure portion 32B from moving toward the second conductor exposure portion 33B. The overlapping portion 32G is inclined relative to the main body portion 32F in a state where the overlapping portion 32G is in contact with the inclined surface 37B. However, the inclined surface 37B may be omitted from the contact surface 37A. The contact surface 37A may be disposed not to be inclined relative to the first direction D1.

As shown in FIG. 9, the first flat cable 32 has a first thickness W1 defined in the first direction D1 in the state where the first conductor connection portion 32A is electrically connected to the first bus bar 34A. The second flat cable 33 has a second thickness W2 defined in the first direction D1 in the state where the second conductor connection portion 33A is electrically connected to the second bus bar 35A. The restriction portion 37 has a protrusion length L1 defined in the first direction D1 from the first surface 31A. The protrusion length L1 is greater than the second thickness W2. In the present embodiment, the protrusion length L1 is greater than the total of the first thickness W1 and the second thickness W2. However, the protrusion length L1 may be less than or equal to the total of the first thickness W1 and the second thickness W2.

As shown in FIG. 8, the restriction portion 37 is disposed to partially overlap the first flat cable 32 when viewed from the first direction D1. The restriction portion 37 is disposed not to overlap the second flat cable 33 when viewed from the first direction D1. The overlapping portion 32G is disposed to at least partially overlap the restriction portion 37 when viewed from the first direction D1. In the present embodiment, the overlapping portion 32G is disposed to partially overlap the restriction portion 37 when viewed from the first direction D1. However, the overlapping portion 32G may be disposed to entirely overlap the restriction portion 37 when viewed from the first direction D1.

The overlapping portion 32G protrudes from the main body portion 32F when viewed from the first direction D1 in a state where the restriction portion 37 restricts the first conductor exposure portion 32B from moving toward the second conductor exposure portion 33B. The overlapping portion 32G protrudes from the main body portion 32F toward the first conductor connection portion 32A when viewed from the first direction D1 in a state where the restriction portion 37 restricts the first conductor exposure portion 32B from moving toward the second conductor exposure portion 33B. The overlapping portion 32G is disposed not to overlap the main body portion 32F when viewed from the first direction D1 in a state where the restriction portion 37 restricts the first conductor exposure portion 32B from moving toward the second conductor exposure portion 33B. However, the overlapping portion 32G may be disposed to protrude from the main body portion 32F in another direction. The overlapping portion 32G may be disposed to at least partially overlap the main body portion 32F when viewed from the first direction D1 in a state where the restriction portion 37 restricts the first conductor exposure portion 32B from moving toward the second conductor exposure portion 33B.

As described above, the cable connector assembly 30 includes the cable connector 31, the first flat cable 32, and the second flat cable 33. The cable connector 31 includes the first bus bar 34A having conductivity, the second bus bar 35A having conductivity, and the connector body 36 having electrical insulation and partially covering the first bus bar 34A and the second bus bar 35A. The first flat cable 32 includes the first conductor connection portion 32A electrically connected to the first bus bar 34A and the first conductor exposure portion 32B provided at the position different from the position of the first conductor connection portion 32A. The second flat cable 33 includes the second conductor connection portion 33A electrically connected to the second bus bar 35A and the second conductor exposure portion 33B provided at the position different from the position of the second conductor connection portion 33A. The cable connector 31 includes the first surface 31A and the second surface 31B provided on the reverse side of the first surface 31A in the first direction D1. The first flat cable 32 is disposed to partially overlap the second flat cable 33 when viewed from the first direction D1. The second flat cable 33 is partially provided between the first surface 31A and the first flat cable 32 in the first direction D1. The cable connector 31 includes the restriction portion 37 contactable with the first flat cable 32 to restrict the first conductor exposure portion 32B from moving toward the second conductor exposure portion 33B in the first direction D1.

With the cable connector assembly 30, since the restriction portion 37 restricts the first conductor exposure portion 32B from moving toward the second conductor exposure portion 33B in the first direction D1, it is possible to suppress or prevent short-circuiting between the first conductor exposure portion 32B and the second conductor exposure portion 33B with a relatively simple structure. Therefore, it is possible to suppress or prevent short-circuiting between the first flat cable 32 and the second flat cable 33 while suppressing the increase in the manufacturing cost.

### Second Embodiment

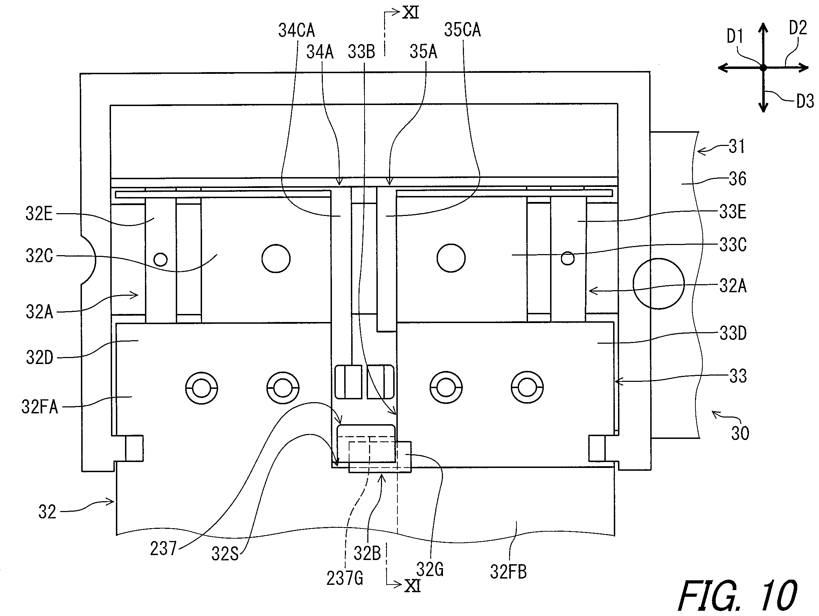

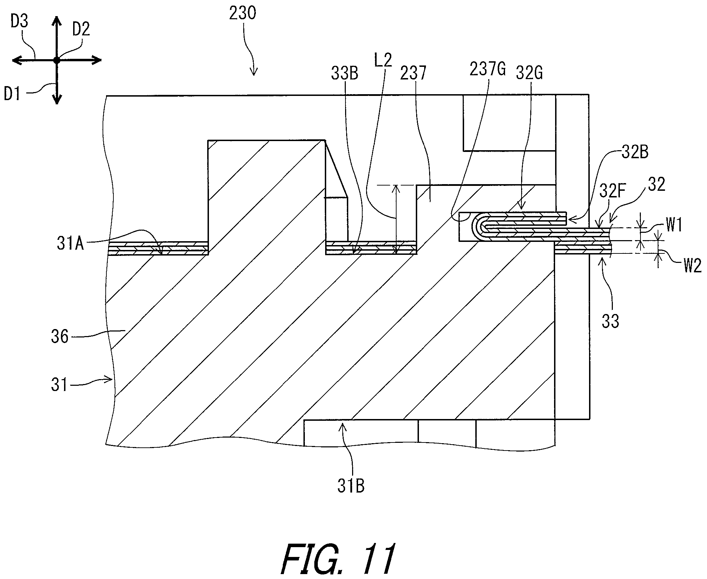

A cable connector assembly 230 according to the second embodiment will be described below with reference to FIGS. 10 and 11. Except for the restriction portion 37, the cable connector assembly 230 has substantially the same structure as the cable connector assembly 30 according to the first embodiment. Therefore, components having substantially the same structure as those in the first embodiment are assigned the same reference numbers, and for simplification, they are not described and/or illustrated in detail again here.

As shown in FIG. 10, the cable connector assembly 230 includes a cable connector 231, the first flat cable 32, and the second flat cable 33. The cable connector 231 has substantially the same structure as the cable connector 31 of the first embodiment.

As shown in FIG. 11, the cable connector 231 includes a restriction portion 237. The restriction portion 237 is contactable with the first flat cable 32 in the first direction D1 to restrict the first conductor exposure portion 32B from moving toward the second conductor exposure portion 33B. The restriction portion 237 protrudes from the first surface 31A of the connector body 36 in the first direction D1.

In the present embodiment, the restriction portion 237 is integrally provided with the connector body 36 as a one-piece member. However, the restriction portion 237 may be a separate member from the connector body 36. In that case, for example, the restriction portion 237 may be attached to the connector body 36 using an attachment structure such as adhesion or press-fitting.

The restriction portion 237 is contactable with the overlapping portion 32G to restrict the overlapping portion 32G from moving toward the second conductor exposure portion 33B in the first direction D1. In the present embodiment, the restriction portion 237 includes a support groove 237G contactable with the overlapping portion 32G to restrict the first conductor exposure portion 32B from moving toward the second conductor exposure portion 33B in the first direction D1. The overlapping portion 32G is at least partially disposed in the support groove 237G. The overlapping portion 32G is disposed in the support groove 237G in a bent state relative to the main body portion 32F.

The restriction portion 237 has a protrusion length L2 defined in the first direction D1 from the first surface 31A. The protrusion length L2 is greater than the second thickness W2. In the present embodiment, the protrusion length L2 is greater than the total of the first thickness W1 and the second thickness W2. However, the protrusion length L2 may be less than or equal to the total of the first thickness W1 and the second thickness W2.

As shown in FIG. 10, the restriction portion 237 is disposed to partially overlap the first flat cable 32 when viewed from the first direction D1. The restriction portion 237 is disposed not to overlap the second flat cable 33 when viewed from the first direction D1. The overlapping portion 32G is disposed to at least partially overlap the restriction portion 237 when viewed from the first direction D1. In the present embodiment, the overlapping portion 32G is disposed to partially overlap the restriction portion 237 when viewed from the first direction D1. However, the overlapping portion 32G may be disposed to entirely overlap the restriction portion 237 when viewed from the first direction D1.

The overlapping portion 32G protrudes from the main body portion 32F when viewed from the first direction D1 in a state where the restriction portion 237 restricts the first conductor exposure portion 32B from moving toward the second conductor exposure portion 33B. The overlapping portion 32G protrudes toward the first conductor connection portion 32A from the main body portion 32F when viewed from the first direction D1 in a state where the restriction portion 237 restricts the first conductor exposure portion 32B from moving toward the second conductor exposure portion 33B. The overlapping portion 32G is disposed not to overlap the main body portion 32F when viewed from the first direction D1 in a state where the restriction portion 237 restricts the first conductor exposure portion 32B from moving toward the second conductor exposure portion 33B. However, the overlapping portion 32G may be disposed to protrude from the main body portion 32F in another direction. The overlapping portion 32G may be disposed to at least partially overlap the main body portion 32F when viewed from the first direction D1 in a state where the restriction portion 237 restricts the first conductor exposure portion 32B from moving toward the second conductor exposure portion 33B.

The overlapping portion 32G is disposed to at least partially overlap the main body portion 32F when viewed from the first direction D1 in a state where the overlapping portion 32G is disposed in the support groove 237G. In the present embodiment, the overlapping portion 32G is disposed to partially overlap the main body portion 32F when viewed from the first direction D1 in a state where the overlapping portion 32G is disposed in the support groove 237G. However, the overlapping portion 32G may be disposed to entirely overlap the main body portion 32F when viewed from the first direction D1 in a state where the overlapping portion 32G is disposed in the support groove 237G.

As described above, the cable connector assembly 230 includes the cable connector 31, the first flat cable 32, and the second flat cable 33. The cable connector 31 includes the first bus bar 34A having conductivity, the second bus bar 35A having conductivity, and the connector body 36 having electrical insulation and partially covering the first bus bar 34A and the second bus bar 35A. The first flat cable 32 includes the first conductor connection portion 32A electrically connected to the first bus bar 34A and the first conductor exposure portion 32B provided at the position different from the position of the first conductor connection portion 32A. The second flat cable 33 includes the second conductor connection portion 33A electrically connected to the second bus bar 35A and the second conductor exposure portion 33B provided at the position different from the position of the second conductor connection portion 33A. The cable connector 31 includes the first surface 31A and the second surface 31B provided on a reverse side of the first surface 31A in the first direction D1. The first flat cable 32 is disposed to partially overlap the second flat cable 33 when viewed from the first direction D1. The second flat cable 33 is partially provided between the first surface 31A and the first flat cable 32 in the first direction D1. The cable connector 31 includes the restriction portion 237 contactable with the first flat cable 32 to restrict the first conductor exposure portion 32B from moving toward the second conductor exposure portion 33B in the first direction D1.

With the cable connector assembly 230, since the restriction portion 237 restricts the first conductor exposure portion 32B from moving toward the second conductor exposure portion 33B in the first direction D1, it is possible to suppress or prevent short-circuiting between the first conductor exposure portion 32B and the second conductor exposure portion 33B with a relatively simple structure. Therefore, it is possible to suppress or prevent short-circuiting between the first flat cable 32 and the second flat cable 33 while suppressing the increase in the manufacturing cost.

### Third Embodiment

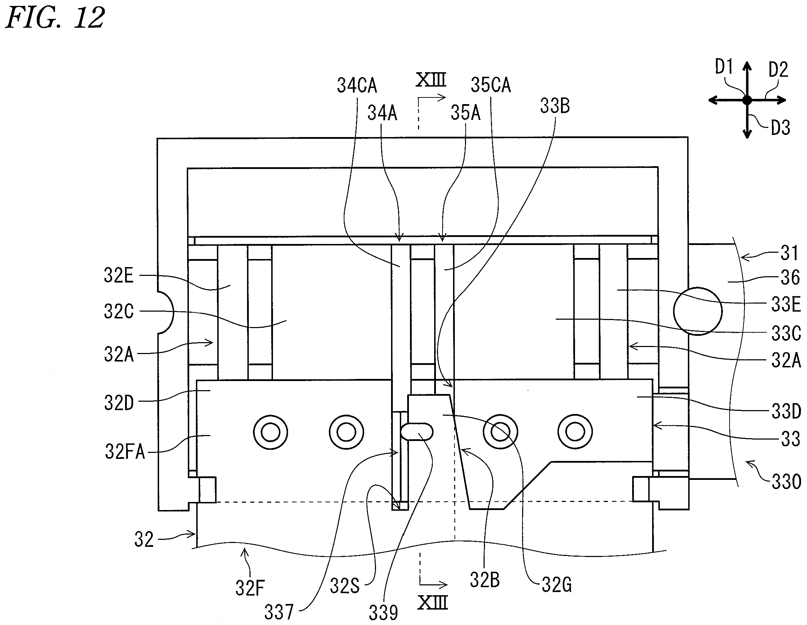

A cable connector assembly 330 according to the third embodiment will be described below with reference to FIGS. 12 to 14. Except for the restriction portion 37, the cable connector assembly 330 has substantially the same structure as the cable connector assembly 30 according to the first embodiment. Therefore, components having substantially the same structure as those in the first embodiment are assigned the same reference numbers, and for simplification, these components are not described and/or illustrated in detail again here.

As shown in FIG. 12, the cable connector assembly 330 includes a cable connector 331, the first flat cable 32, and the second flat cable 33. The cable connector 331 has substantially the same structure as the cable connector 31 of the first embodiment.

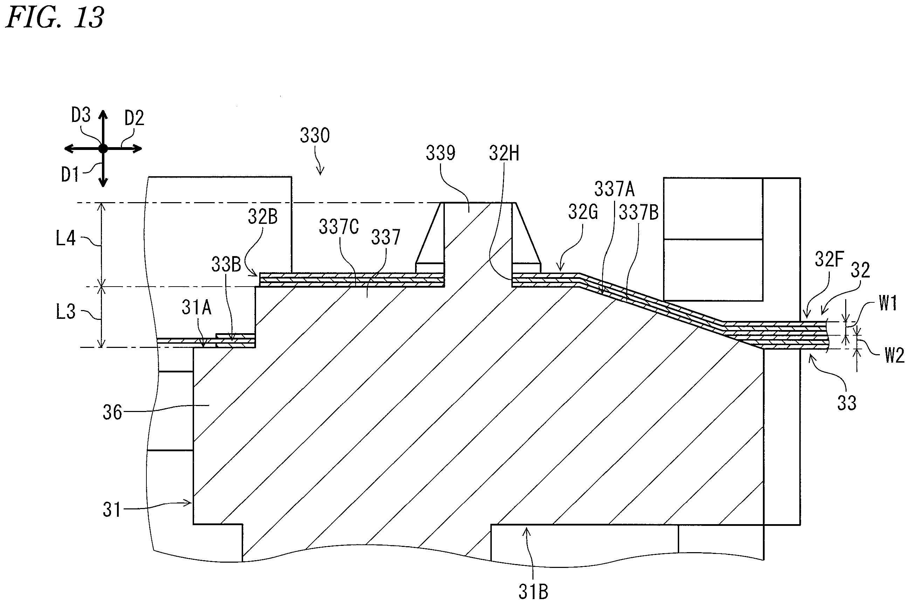

As shown in FIG. 13, the cable connector 331 includes a restriction portion 337. The restriction portion 337 is contactable with the first flat cable 32 in the first direction D1 to restrict the first conductor exposure portion 32B from moving toward the second conductor exposure portion 33B. The restriction portion 337 protrudes from the first surface 31A of the connector body 36 in the first direction D1. The restriction portion 337 has substantially the same structure as the restriction portion 37 of the first embodiment.

In the present embodiment, the restriction portion 337 is integrally provided with the connector body 36 as a one-piece member. However, the restriction portion 337 may be a separate member from the connector body 36. In that case, for example, the restriction portion 337 may be attached to the connector body 36 using an attachment structure such as adhesion or press-fitting.

The restriction portion 337 is contactable with the overlapping portion 32G to restrict the overlapping portion 32G from moving toward the second conductor exposure portion 33B in the first direction D1. In the present embodiment, the restriction portion 337 includes a contact surface 337A contactable with the overlapping portion 32G. The contact surface 337A includes an inclined surface 337B inclined relative to the first direction D1. The overlapping portion 32G is inclined relative to the main body portion 32F in a state where the restriction portion 337 restricts the first conductor exposure portion 32B from moving toward the second conductor exposure portion 33B. The restriction portion 337 is contactable with the overlapping portion 32G to restrict the overlapping portion 32G from moving toward the second conductor exposure portion 33B in the first direction D1. The overlapping portion 32G is inclined relative to the main body portion 32F in a state where the overlapping portion 32G is in contact with the inclined surface 337B. However, the inclined surface 337B may be omitted from the contact surface 337A. The contact surface 337A may be disposed not to be inclined relative to the first direction D1.

In the present embodiment, the cable connector assembly 330 further comprises a holding portion 339 provided to the restriction portion 337. The holding portion 339 is contactable with the first flat cable 32 to restrict the first conductor exposure portion 32B from moving away from the second conductor exposure portion 33B in the first direction D1. The holding portion 339 is contactable with the first flat cable 32 to restrict the first conductor exposure portion 32B from moving toward the second conductor exposure portion 33B in the first direction D1. That is, the holding portion 339 is configured to hold the first flat cable 32 to restrict the first conductor exposure portion 32B from moving toward the second conductor exposure portion 33B in the first direction D1.

The holding portion 339 protrudes from the restriction portion 337 in the first direction D1. The first flat cable 32 includes a holding opening 32H. The holding portion 339 protrudes from the restriction portion 337 through the holding opening 32H in the first direction D1. However, the contact portion between the first flat cable 32 and the holding portion 339 may have other structures. For example, the holding portion 339 may have a groove, and the first flat cable 32 may be inserted into the groove. As shown in FIG. 12, the holding opening 32H includes a notch. However, the holding opening 32H may include a hole into which the holding portion 339 is inserted.

In the present embodiment, the holding portion 339 is integrally provided with the restriction portion 337 as a one-piece member. However, the holding portion 339 may be a separate member from the restriction portion 337. In that case, for example, the holding portion 339 may be attached to the restriction portion 337 using an attachment structure such as adhesion or press-fitting.

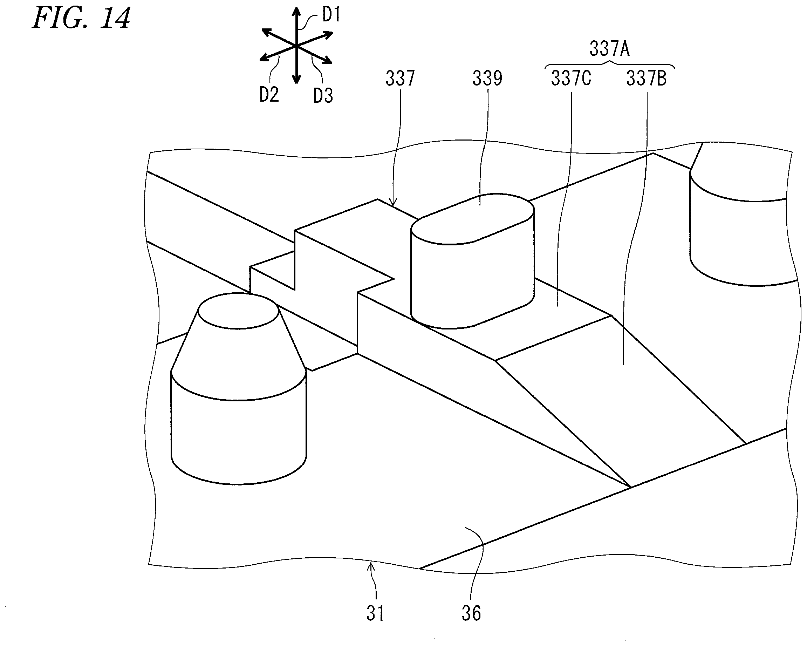

As shown in FIG. 14, the holding portion 339 is provided on the contact surface 337A of the restriction portion 337 and protrudes from the contact surface 337A in the first direction D1. The contact surface 337A includes an additional contact surface 337C. For example, the additional contact surface 337C is perpendicular to the first direction D1. The additional contact surface 337C is inclined relative to the inclined surface 337B. The additional contact surface 337C extends from the inclined surface 337B in the third direction D3. The holding portion 339 is provided on the additional contact surface 33 and protrudes from the additional contact surface 337C in the first direction D1. However, the additional contact surface 337C may be inclined relative to the first direction D1. The holding portion 339 may protrude from the inclined surface 337B.

As shown in FIG. 13, the restriction portion 337 has a protrusion length L3 defined in the first direction D1 from the first surface 31A. The protrusion length L3 is defined in the first direction D1 from the first surface 31A to the additional contact surface 337C of the contact surface 337A. The protrusion length L3 is greater than the second thickness W2. In the present embodiment, the protrusion length L3 is greater than the total of the first thickness W1 and the second thickness W2. However, the protrusion length L3 may be less than or equal to the total of the first thickness W1 and the second thickness W2.

The holding portion 339 has an additional protrusion length L4. The additional protrusion length L4 is defined in the first direction D1 from the contact surface 337A of the restriction portion 337 to the end of the holding portion 339. In the present embodiment, the additional protrusion length L4 is greater than the protrusion length L3. The additional protrusion length L4 is greater than the first thickness W1. However, the additional protrusion length L4 may be equal to or less than the protrusion length L3. The additional protrusion length L4 may be equal to or less than the first thickness W1.

As shown in FIG. 12, the restriction portion 337 is disposed to partially overlap the first flat cable 32 when viewed from the first direction D1. The restriction portion 337 is disposed not to overlap the second flat cable 33 when viewed from the first direction D1. The overlapping portion 32G is disposed to at least partially overlap the restriction portion 337 when viewed from the first direction D1. In the present embodiment, the overlapping portion 32G is disposed to partially overlap the restriction portion 337 when viewed from the first direction D1. However, the overlapping portion 32G may be disposed to entirely overlap the restriction portion 337 when viewed from the first direction D1.

The overlapping portion 32G protrudes from the main body portion 32F when viewed from the first direction D1 in a state where the restriction portion 337 restricts the first conductor exposure portion 32B from moving toward the second conductor exposure portion 33B. The overlapping portion 32G protrudes toward the first conductor connection portion 32A from the main body portion 32F when viewed from the first direction D1 in a state where the restriction portion 337 restricts the first conductor exposure portion 32B from moving toward the second conductor exposure portion 33B. The overlapping portion 32G is disposed not to overlap the main body portion 32F when viewed from the first direction D1 in a state where the restriction portion 337 restricts the first conductor exposure portion 32B from moving toward the second conductor exposure portion 33B. However, the overlapping portion 32G may be disposed to protrude from the main body portion 32F in another direction. The overlapping portion 32G may be disposed to at least partially overlap the main body portion 32F when viewed from the first direction D1 in a state where the restriction portion 337 restricts the first conductor exposure portion 32B from moving toward the second conductor exposure portion 33B.

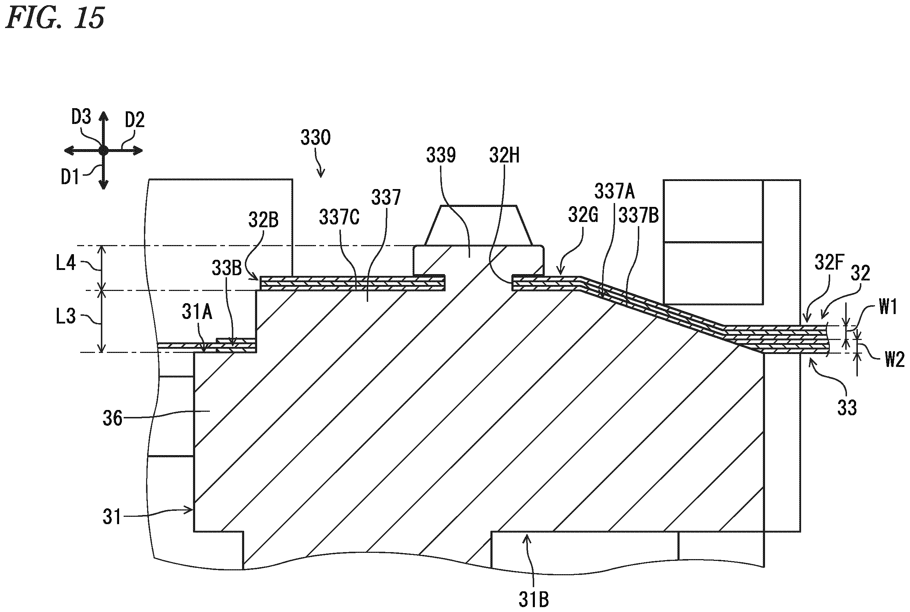

As shown in FIG. 15, by melting the holding portion 339 after the attachment of the first flat cable 32, the first flat cable 32 can be held between the restriction portion 337 and the holding portion 339. By holding the first flat cable 32 between the restriction portion 337 and the holding portion 339, it is possible to more reliably restrict the first flat cable 32 from moving in the first direction D1 relative to the restriction portion 337, making the posture of the first flat cable 32 more stable.

As described above, the cable connector assembly 330 includes the cable connector 31, the first flat cable 32, and the second flat cable 33. The cable connector 31 includes the first bus bar 34A having conductivity, the second bus bar 35A having conductivity, and the connector body 36 having electrical insulation and partially covering the first bus bar 34A and the second bus bar 35A. The first flat cable 32 includes the first conductor connection portion 32A electrically connected to the first bus bar 34A and the first conductor exposure portion 32B provided in the position different from the position of the first conductor connection portion 32A. The second flat cable 33 includes the second conductor connection portion 33A electrically connected to the second bus bar 35A and the second conductor exposure portion 33B provided in the position different from the position of the second conductor connection portion 33A. The cable connector 31 includes the first surface 31A and the second surface 31B provided on a reverse side of the first surface 31A in the first direction D1. The first flat cable 32 is disposed to partially overlap the second flat cable 33 when viewed from the first direction D1. The second flat cable 33 is provided partially between the first surface 31A and the first flat cable 32 in the first direction D1. The cable connector 31 includes a restriction portion 337 contactable with the first flat cable 32 in the first direction D1 to restrict the first conductor exposure portion 32B from moving toward the second conductor exposure portion 33B.

With the cable connector assembly 330, the restriction portion 337 restricts the first conductor exposure portion 32B from moving toward the second conductor exposure portion 33B in the first direction D1, it is possible to suppress or prevent short-circuiting between the first conductor exposure portion 32B and the second conductor exposure portion 33B with a relatively simple structure. Therefore, it is possible to suppress or prevent short-circuiting between the first flat cable 32 and the second flat cable 33 while suppressing the increase in the manufacturing cost.

In the present application, the term "comprising" and its derivatives are openended terms that describe the presence of constituent elements and do not exclude the presence of other constituent elements not described. This concept also applies to the terms "having," "including," and their derivatives.

In the present application, ordinal numbers such as "first" and "second" are merely identifiers, but do not have any other meanings (e.g., a particular order and the like). For example, the term "first element" does not imply an existence of "second element," and the term "second element" does not imply an existence of "first element."

In the present disclosure, the expressions "parallel," "perpendicular," and "coincident" should not be strictly interpreted, and include the meanings "substantially parallel," "substantially perpendicular," and "substantially coincident," respectively. Other expressions relating to arrangements are not strictly interpreted.

The phrase "at least one of A and B" in the present disclosure encompasses, for example, (1) A alone, (2) B alone, and (3) both A and B. The phrase "at least one of A, B, and C" encompasses, for example, (1) A alone, (2) B alone, (3) C alone, (4) A and B, (5) B and C, (6) A and C, and (7) all A, B, and C. In the present disclosure, the phrase "at least one of A and B" is not interpreted as "at least one of A and at least one of B."

In view of the above disclosure, it is obvious that various changes and modifications of the present invention are possible. Therefore, the present invention may be implemented in a manner different from that of the specific disclosure of the present application to the extent that it does not depart from the intent of the present invention.

### Reference Signs List

2 : Rotary connector device
10 : Stator
20 : Rotator
30, 130, 230 : Cable connector assembly
31, 39, 131, 139 : Cable connector
31A: First surface
31B : Second surface
32, 132 : First flat cable
32A : First conductor connection portion
32B : First conductor exposure portion
32C : First conductor
32D : First insulation cover
32F : Main body portion
32G : Overlapping portion
32S : Slit
32H : Holding opening
33, 133 : Second flat cable
33A : Second conductor connection portion
33B : Second conductor exposure portion
33C : Second conductor
33D : Second insulation cover
33E : Second additional conductor
34A : First bus bar
34B : First bus bar
34CA : First cable connection portion
34CB : First cable connection portion
36 : Connector body
37, 237, 337 : Restriction portion
339 : Holding portion
37A : Contact surface
37B : Inclined surface
50 : Cable housing space
237G : Support groove
A1 : Rotational axis
D1 : First direction
D2 : Second direction
D3 : Third direction
D4 : Circumferential direction
W1 : First thickness
W2 : Second thickness

## Claims

1. A cable connector assembly comprising:
a cable connector including
a first bus bar having conductivity,
a second bus bar having conductivity, and
a connector body having electrical insulation and partially covering the first bus bar and the second bus bar;
a first flat cable including
a first conductor connection portion electrically connected to the first bus bar, and
a first conductor exposure portion provided at a position different from a position of the first conductor connection portion;
a second flat cable including
a second conductor connection portion electrically connected to the second bus bar, and
a second conductor exposure portion provided at a position different from a position of the second conductor connection portion;
the cable connector including a first surface and a second surface provided on a reverse side of the first surface in a first direction;
the first flat cable being disposed to partially overlap the second flat cable when viewed from the first direction;
the second flat cable being provided partially between the first surface and the first flat cable in the first direction; and
the cable connector including a restriction portion contactable with the first flat cable to restrict the first conductor exposure portion from moving toward the second conductor exposure portion in the first direction.

2. The cable connector assembly according to claim 1, wherein
the restriction portion is disposed to partially overlap the first flat cable when viewed from the first direction, and
the restriction portion is disposed not to overlap the second flat cable when viewed from the first direction.

3. The cable connector assembly according to claim 1, wherein
the restriction portion protrudes from the first surface of the connector body in the first direction.

4. The cable connector assembly according to claim 3, wherein
the first flat cable has a first thickness defined in the first direction in a state where the first conductor connection portion is electrically connected to the first bus bar,
the second flat cable has a second thickness defined in the first direction in a state where the second conductor connection portion is electrically connected to the second bus bar,
the restriction portion has a protrusion length defined in the first direction from the first surface, and
the protrusion length is greater than the second thickness.

5. The cable connector assembly according to claim 4, wherein
the protrusion length is greater than a total of the first thickness and the second thickness.

6. The cable connector assembly according to any one of claims 1 to 5, wherein
the restriction portion is integrally provided with the connector body.

7. The cable connector assembly according to any one of claims 1 to 5, wherein
the first conductor exposure portion is disposed to at least partially overlap the second conductor exposure portion when viewed from the first direction.

8. The cable connector assembly according to any one of claims 1 to 5, wherein
the first flat cable includes
a main body portion including the first conductor connection portion, and
an overlapping portion at least partially including the first conductor exposure portion and disposed to at least partially overlap the second conductor exposure portion when viewed from the first direction, and
the restriction portion is contactable with the overlapping portion to restrict the overlapping portion from moving toward the second conductor exposure portion in the first direction.

9. The cable connector assembly according to claim 8, wherein
the restriction portion includes a contact surface contactable with the overlapping portion, and
the contact surface includes an inclined surface inclined relative to the first direction.

10. The cable connector assembly according to claim 8, wherein
the overlapping portion is inclined relative to the main body portion in a state where the restriction portion restricts the first conductor exposure portion from moving toward the second conductor exposure portion.

11. The cable connector assembly according to claim 8, wherein
the overlapping portion protrudes from the main body portion when viewed from the first direction in a state where the restriction portion restricts the first conductor exposure portion from moving toward the second conductor exposure portion.

12. The cable connector assembly according to claim 8, wherein
the restriction portion includes a support groove contactable with the overlapping portion to restrict the first conductor exposure portion from moving toward the second conductor exposure portion in the first direction, and
the overlapping portion is at least partially disposed in the support groove.

13. The cable connector assembly according to claim 12, wherein
the overlapping portion is disposed in the support groove in a bent state relative to the main body portion.

14. The cable connector assembly according to claim 13, wherein
the overlapping portion is disposed to at least partially overlap the main body portion when viewed from the first direction in a state where the overlapping portion is disposed in the support groove.

15. The cable connector assembly according to any one of claims 1 to 5, further comprising
a holding portion provided to the restriction portion, wherein
the holding portion is contactable with the first flat cable to restrict the first conductor exposure portion from moving away from the second conductor exposure portion in the first direction.

16. The cable connector assembly according to claim 15, wherein
the holding portion protrudes from the restriction portion in the first direction.

17. The cable connector assembly according to claim 16, wherein
the first flat cable includes a holding opening, and
the holding portion protrudes from the restriction portion through the holding opening in the first direction.

18. A rotary connector device comprising:
a stator;
a rotator rotatable about a rotational axis relative to the stator; and
the cable connector assembly according to any one of claims 1 to 5.
